# EUROPÄISCHE PATENTSCHRIFT

(11) **EP 0 298 387 B1**
(45) Veröffentlichungstag und Bekanntmachung des Hinweises auf die Patenterteilung: **28.04.1993**
(21) Anmeldenummer: 88110526.6
(22) Anmeldetag: 01.07.1988
(51) Int. Cl.: G21C 17/06

(54) **Einrichtung und Verfahren zur Inspektion von Kernreaktor-Brennelementen**
Device and method for the inspection of nuclear reactor fuel assemblies
Dispositif et méthode pour l'inspection des assemblages de combustible des réacteurs nucléaires

(30) Priorität: 07.07.1987 US 70705
(43) Veröffentlichungstag der Anmeldung: 11.01.1989
(73) Patentinhaber: ABB Reaktor GmbH, D-68167 Mannheim (DE)
(72) Erfinder: Donnelly, Thomas J., Columbia, MD 21044 (US)
(74) Vertreter: Rupprecht, Klaus, Dipl.-Ing.

(56) Entgegenhaltungen:
- DE-A- 2 605 962
- DE-A- 2 626 805
- DE-A- 3 106 360
- DE-B- 2 656 433
- GB-A- 1 109 101
- US-A- 3 823 068
- US-A- 4 148 403

## Beschreibung

Die Erfindung betrifft eine Einrichtung zum Dektieren defekter Brennstäbe eines kompletten Brennelementes wassergekühlter Kernreaktoren mit einer einen Wandler tragenden Sonde zur Beaufschlagung eines Brennstabes mit Ultraschall, wobei eine Intensitätsänderung der einen Wandbereich des Brennstabes durchlaufenden Signal ein Maß für einen im Brennstab vorhandenen Wassereinschluß ist.

Eine derartige Einrichtung ist aus der DE-A 26 05 962 bekannt. Diese Einrchtung wäre zur Prüfung eines Siedewasserreaktorbrennelementes, das typischer Weise von einem Kasten umgeben ist, nur nach dem aufwendigen und daher unerwünschten Entfernen dieses Kastens einsetzbar.

Ferner ist aus der US-A 4,148,403 ein über ein Modell zwangsgeführter Manipulator zur Aufnahme von Inspektionsgeräten für die Dampferzeugerprüfung bekannt. Der Manipulator ist mit mehreren Gelenkarmen ausgestattet, die seine Bewegung von außerhalb der Dampferzeugerkammer nach innerhalb derselben ermöglichen. Das eine Ende eines Gelenkarmes ist dazu an einem im Mannloch des Dampferzeugers festgeklemmten Halter angelenkt.

Es stellt sich die Aufgabe, eine Einrichtung der eingangs genannten Art anzugeben, die für ein Siedewasserreaktorbrennelement einsetzbar ist, ohne daß eine Entfernung des Kastens erforderlich ist.

Gelöst wird diese Aufgabe erfindungsgemäß dadurch, daß zum Detektieren der defekten Brennstäbe eines Siedewasserreaktorbrennelementes die Sonde auf ihrer Umfangsfläche in Achsrichtung betrachtet zwei übereinander angeordneten, auf einer Symmetrieachse liegende Wandler trägt, von welchen der eine als Sende- und der andere als Empfängerprüfkopf dient, daß die Sonde flexibel ausgebildet ist und um einen unterhalb einer unteren Tragplatte des Brennelementes fixierten Drehpunkt derart dreh- und/oder schwenkbar ist, daß sie nacheinander durch verschiedene Öffnungen der Tragplatte in einen von vier Brennstäben begrenzten Raum einfahrbar ist.

Mit dieser Einrichtung sind alle zu einem von vier Brennstäben umgebenen Raum führenden Öffnungen durch relativ kleine Zugangsöffnung des Nasenstückes zugänglich, so daß die Prüfung des Siedewasserreaktorbrennelementes ohne das unerwünschte Entfernen des Kastens erfolgen kann. Vorzugsweise ist der fixierte Drehpunkt durch ein unterhalb der unteren Tragplatte angeordnetes Dreh- und Schwenklager gebildet, durch das die Sonde geführt ist. Zur Beschleunigung der Detektierung können mehrere Dreh- und Schwenklager vorgesehen werden, wobei jeweils ein Lager einem Sektor des in Form eines Dreifußes ausgebildeten Nasenstückes des Brennelementes zugeordnet ist.

Anhand eines Ausführungsbeispieles und der Zeichnungen Figur 1 bis 7 wird die erfindungsgemäße Einrichtung beschrieben.

Die Zeichnungen zeigen:
- Figur 1: Ein typisches Siedewasserreaktorbrennelement,
- Figur 2: eine Ansicht von unten auf die untere Tragplatte und ein Nasenstück des Siedewasserreaktorbrennelementes,
- Figur 3: eine Ansicht von unten auf das untere Tragplattengitter, den umgekehrten Dreifuß und die bevorzugte Anordnung des Drehpunktes nach der vorliegenden Erfindung,
- Figur 4: eine Ausbildung der Erfindung bei welcher die Sonde durch ein Kugelgelenk eines Dreh- und Schwenklagers geführt ist,
- Figur 5: einen Teilbereich des Brennelementes mit einer eingefahrenen Sonde,
- Figur 6: einen Schnitt entlang der Linie V-V der Figur 5 und
- Figur 7: eine andere Sondenausbildung.

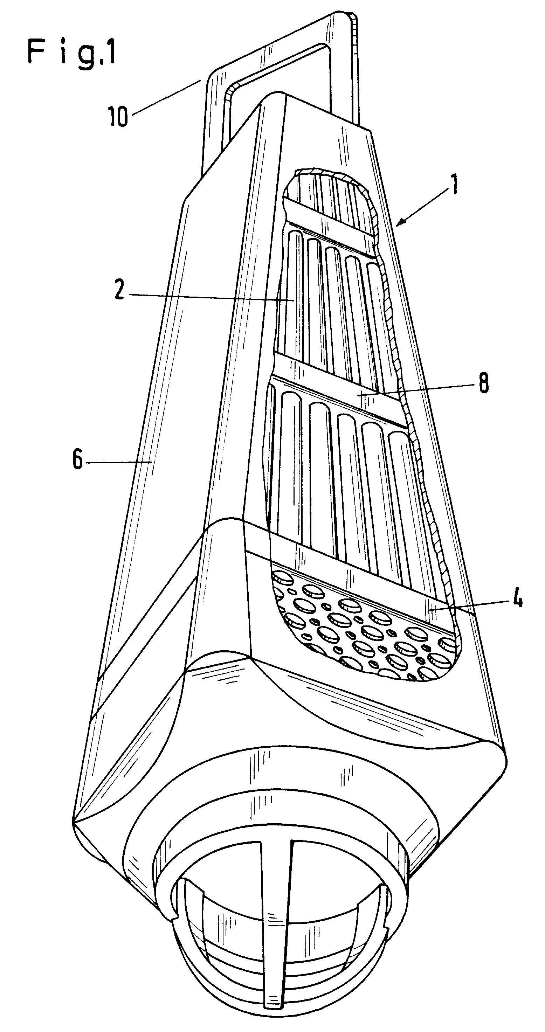

Die Figur 1 zeigt ein typisches Siedewasserreaktorbrennelement das mit 1 bezeichnet ist. Ein Siedewasserreaktorbrennelement besteht im wesentlichen aus einer Anzahl von Brennstäben 2, einer oberen nicht dargestellten Tragplatte, einer unteren Tragplatte 4, einen das Brennstabbündel umfassenden Kasten 6 und eine Anzahl von Abstandhaltern 8. Durch die untere und obere Platte werden die Brennstäbe 2 in einer quadratischen Anordnung gehalten. Das Brennstabbündel besteht üblicherweise aus einer 7 x 7, 8 x 8 oder 9 x 9 Anordnung. Bei diesem Ausführungsbeispiel wird eine 8 x 8 Brennstabanordnung angenommen.

Der das Brennstabbündel umfassende Kasten 6 gibt dem Brennelement seine Außenkontur. Die obere, aus Edelstahl bestehende Tragplatte, weist an ihrer Oberseite eine Tragöse 10 auf, die zum Transport des Brennelementes erforderlich ist. Auch die untere Tragplatte 4 besteht aus Edelstahl und ist mit gitterartig verteilten Bohrungen zur Aufnahme der Endstopfen der Brennstäbe ausgestattet. Das Kühlmittel strömt durch das Nasenstück 12 und wird über die untere Tragplatte 4 zu den Brennstäben hin verteilt. Die gitterformig aufgebauten Abstandshalter 8 tragen fingerartige Federn die an den Außenumfang der Brennstäbe 2 angelegt sind und eine Vibration der Brennstäbe verhindern.

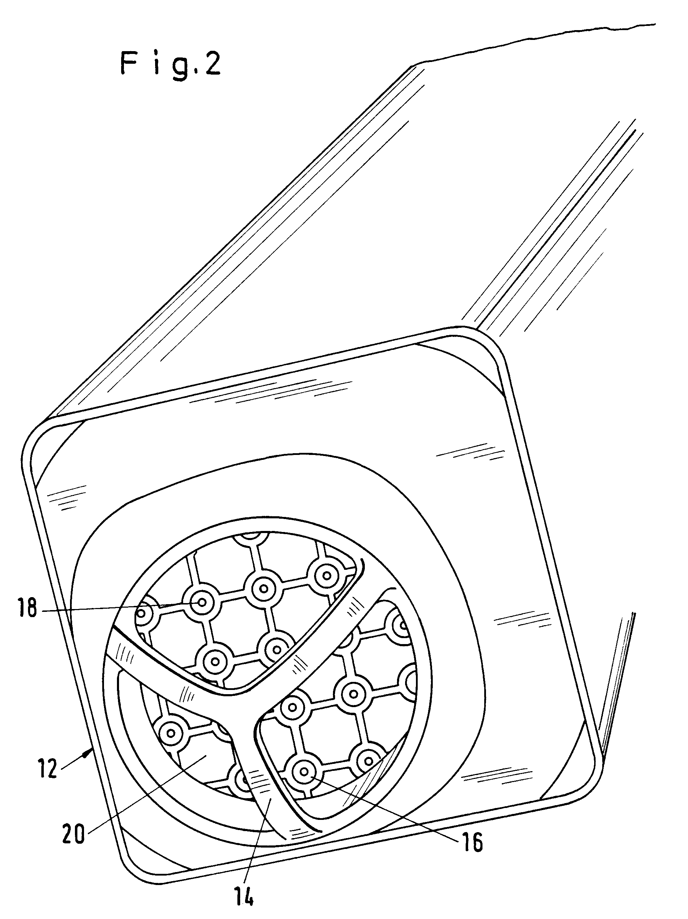

Die Figur 2 zeigt eine Ansicht von unten auf das Siedewasserbrennelement. Ein Nasenstück 12 mit einem umgekehrten Dreifuß 14 erstreckt sich von dem Brennelement 1 nach unten. Man erkennt einen Teil der gitterförmig ausgebildeten unteren Tragplatte 4, die eine Vielzahl von ersten Öffnungen 16 zur Aufnahme der Endstopfen 18 eines jeden Brennstabes 2 aufweist und eine Vielzahl von größer ausgebildeten zweiten Öffnungen 20 besitzt, die das Durchströmen des Kühlmittels während des Betriebes der Kernreaktoranlage zwischen den Brennstäben ermöglichen. Bei einem Brennelement mit einer 8 x 8 Brennstabkonfiguration sind vierundsechzig erste Öffnungen 16 und neunundvierzig zweite Öffnungen 20 in der unteren Tragplatte 4 vorgesehen.

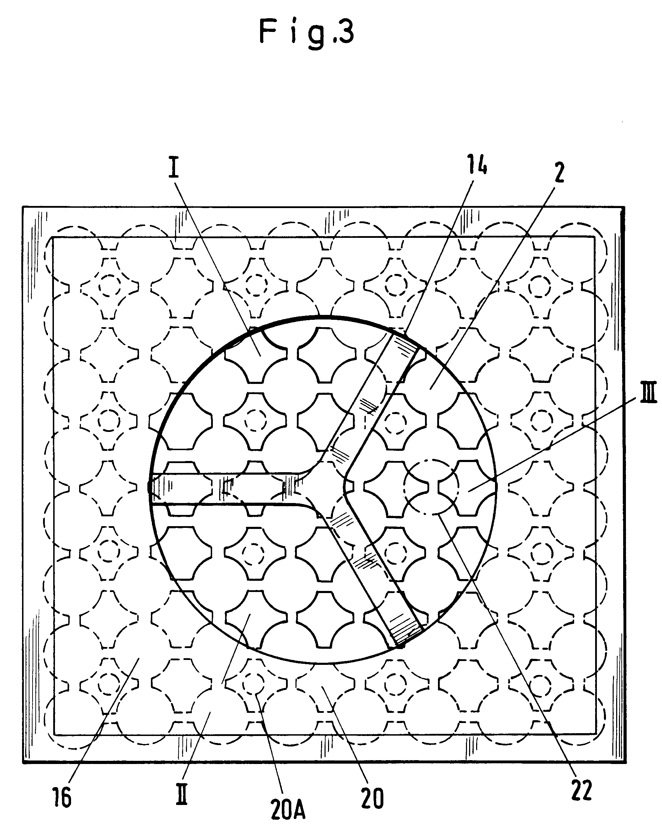

Nach der vorliegenden Erfindung wird eine Ultraschallsonde 28 von unten durch den Dreifuß 14 geführt und wird dann in irgendeine der zweiten Öffnungen 20 eingeschoben. Die Ultraschallsonde könnte an sich in alle neunundvierzig zweite Öffnungen 20 eingeführt werden. Tatsächlich ist jedoch nur der Zugang zu sechzehn dieser zweiten Öffnungen 20 erforderlich, die in Figur 3 durch kleine Kreise gekennzeichnet sind und mit der Nummer 20A bezeichnet sind. Die Sonde 28 kann nämlich um ihre Achse rotieren, so daß von einer der zweiten Öffnungen 20A aus jeder Brennstab in den umgebenden ersten Öffnungen 16 (also insgesamt vier Brennstäbe) geprüft werden kann. Wie auch aus Figur 2 zu erkennen ist, sind viele der Öffnungen 20A durch das Nasenstück und die Anwesenheit des Dreifußes 14 für den Zugang blockiert. Die vorliegende Erfindung setzt daher eine flexible Sonde ein, die durch einen Drehpunkt 22 geführt ist, der in Form eines Dreh- und Schwenklagers 24 in oder geringfügig unter dem Dreifuß angeordnet ist um den Zugang zu jeder der Öffnungen 20 zu ermöglichen.

In einer vereinfachten Darstellung der unteren Tragplatte 4 zeigt die Figur 3 die Anordnung eines jeden der vierundsechzig Brennstäbe eines Siedewasserreaktorbrennelementes mit einer 8 x 8 Brennstabanordnung. Wie diese Figur 3 erkennen läßt, kann bei einem senkrecht von unten durch das Nasenstück gerichteten Blick nur eine Anzahl von sechzehn Brennstäben bzw. Brennstabpositionen erkannt werden. Der umgekehrte Dreifuß 14 bildet drei Sektoren I, II, III die den Blick zu den freiliegenden Brennstäben erlauben. Wie aus der Figur 3 deutlich zu erkennen ist, sind die Sektoren I und II symetrisch im Hinblick auf die freiliegenden Brennstabanzahl, während der Sektor III hinsichtlich der freiliegenden Brennstabanzahl gegenüber den Sektoren I und II unsymetrisch ist. Es wurde gefunden, daß bei einer Anordnung des Drehpunktes 22 zur Durchführung der Sonde im Bereich des unsymetrischen Sektors III jede der neunundvierzig zweiten Öffnungen 20 bzw. der sechzehn zweiten Öffnungen 20A (bei rotierender und schwenkender Sonde) erreichbar sind. Weiterhin wurde gefunden, daß die beste Zugänglichkeit dann errecht wird, wenn der Drehpunkt 22 zentral zum Sektor III angeordnet ist. Um ein paralleles Einfahren mehrerer Sonden zu ermöglichen, kann in jedem Sektor I, II oder III ein Drehpunkt 22 angeordnet sein. Zur Bewegung der Sonde relativ zum Drehpunkt sind viele unterschiedliche Ausführungen möglich.

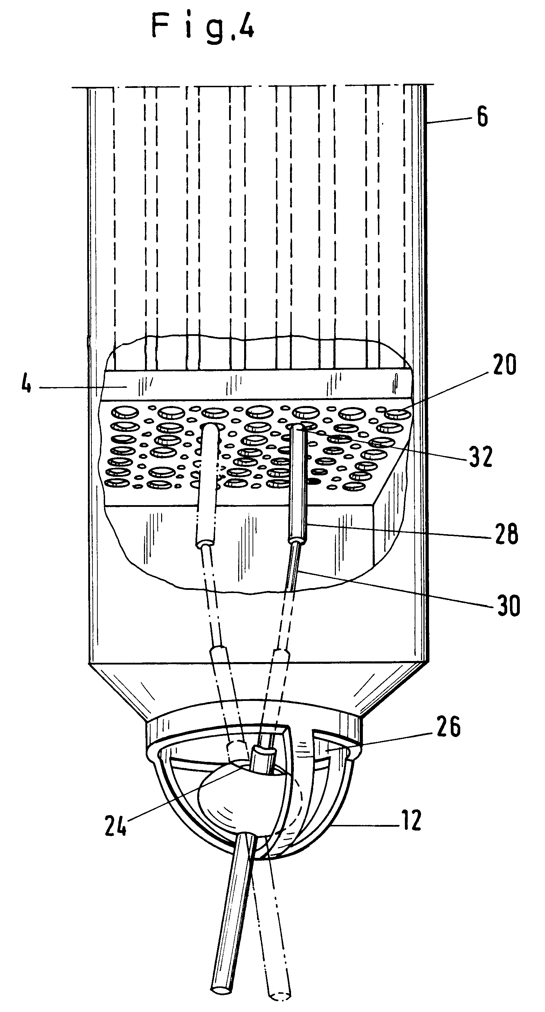

Nach einem in der Figur 4 gezeigten Ausführungsbeispiel stellt ein stationäres Kugelgelenk ein Dreh- und Schwenklager 24 dar. Das Drehgelenk weist eine Öffnung 26 auf, durch welche die Sonde 28 geführt ist. Über am unteren Ende der Sonde angreifende nicht dargestellt Mittel wird die Sonde verdreht, geschwenkt oder in axialer Richtung des Brennelementes verschoben. Derartige Mittel können Schlitten sein, die mit einem Drehteller gekoppelt sind.

Um den Zugang der Öffnungen 20 von einem Drehpunkt 22 aus zu erreichen ist die Sonde 28 mit einem flexiblen Mittelteil 30 ausgebildet, das ein Biegen erlaubt. Die Sonde ist ferner mit einer abgerundeten Nase 32 ausgebildet um ihr Einführen in jede Öffnung ohne Beschädigung der Sonde zu ermöglichen.

Die Ultraschallsonde 28 kann einen Wandler verwenden, der sowohl die Ultraschallsignale aussendet als auch empfängt. Es kann sowohl für das Aussenden als auch für das Empfangen der Ultraschallsignale ein separater Wandler vorgesehen werden. Die von der Sonde ausgesandten Ultraschallsignal bringen die Außenwand des Brennstabes zum Vibrieren. Die Anwesenheit von Wasser im Inneren des Brennstabes beeinflußt die Vibration der Außenwand des Brennstabes und dämpft dabei insbesondere die Amplitude des reflektierten Ultraschallsignals. Zur Prüfung eines Brennstabes ist die Sonde solange zu verdrehen, bis ein Maximalsignal erreicht ist. Das vom Brennstab zurückkehrende Ultraschallsignal wird in einem Schwellendetektor eingegeben, um zu entscheiden, ob das Signal die vorgeschriebene Stärke aufweist, die angibt, daß kein Wasser in dem entsprechenden Brennstab eingeschlossen ist. Die Sonde wird dann um jeweils 90° weitergedreht um den nächsten Brennstab zu prüfen. Alternativ dazu kann die Sonde auch kontinuierlich entlang der 360° rotieren, wobei die vom Brennstab zurücklaufenden Signale kontinuierlich eingefangen und ausgewertet werden. Nach Beendigung eines Prüfvorganges wird die Sonde aus der entsprechenden Öffnung 20 herausgefahren, um den Einzeldrehpunkt verdreht und in die nächste Öffnung 20 eingeführt. Dieser Vorgang wiederholt sich bis alle Brennstäbe eines Brennelementes geprüft sind. Die Anordnung nach der vorliegenden Erfindung erlaubt die individuelle Prüfung eines jeden Brennstabes und damit auch die Isolierung eines jeden defekten Brennstabes.

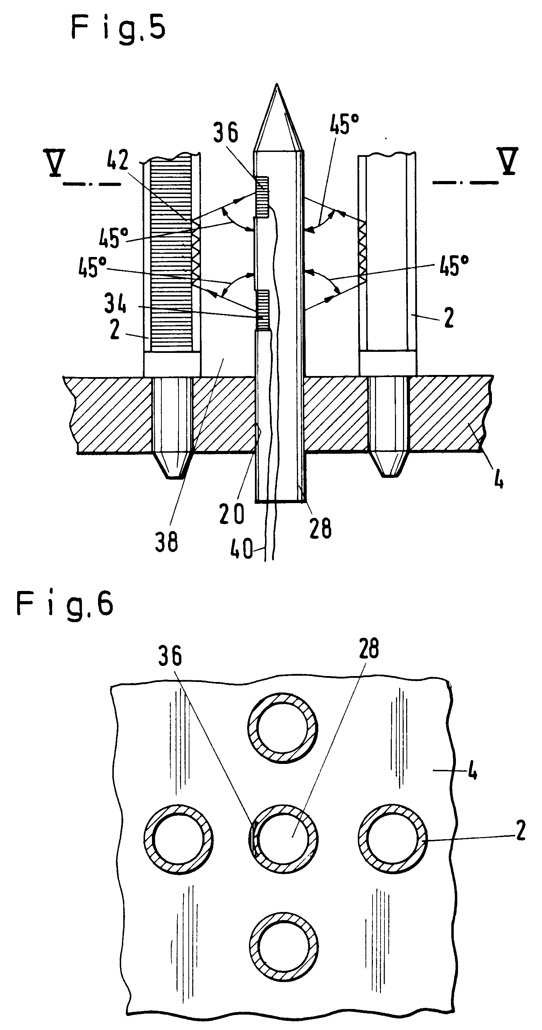

Die Figuren 5 und 6 zeigen eine bevorzugt ausgebildete Sonde in Prüfposition. Die Sonde 28 ist als rohrförmiger Körper ausgebildet, der eine gleitende Führung in der Öffnung 20 der Tragplatte 4 erlaubt und somit einen gleichbleibenden Abstand zu den einer Öffnung 20 zugeordneten vier Brennstäben sicherstellt. Der Sondenkörper trägt ein Paar Ultraschallprüfköpfe (Wandler) von welchen der eine als Sendeprüfkopf 34 und der andere als Empfängerprüfkopf 36 dient. Sie sind in Achsrichtung der Sonde betrachtet in einem Abstand von 40 mm übereinander angeordnet und liegen auf der gleichen Symetrieachse. Sie sind derart in die Oberfläche der Sonde eingelassen, daß sie nicht über diese Oberfläche hinausragen und somit die einfahrbewegung der Sonde 28 in der Öffnung 20 nicht behindern.

Die Sonde 28 wird soweit in den von vier Brennstäben 2 begrenzten Raum 38 eingefahren, bis der untere Prüfkopf (Sendeprüfkopf 34) oberhalb des unteren Pellets (Brennstofftablette) der Brennstabfüllung angeordnet ist. Sobald die Sonde durch Drehbewegung in die Nähe eines Brennstabes gelangt ist, erfolgt eine pendelnde Verdrehung bis der kleinste Abstand zwischen den Prüfköpfen und der Mantelfläche eines Brennstabes 2 erreicht ist. Hier liegt der Auswertebereich der Einrichtung, der über einen nicht dargestellten Bildschirm darstellbar ist. Zu diesem Bildschirm und zu einem mit diesem kombinierten Schreiber zur Dokumentierung der Prüfergebnisse führen die von den Prüfköpfen wegführenden Leitungen 40. Die unter einem Winkel von 45° eingebrachten Signale des Sendeprüfkopfes 34 werden von einem 40 mm entfernten Empfängerprüfkopf 36 aufgenommen und am Bildschirm und/oder durch Schreiberaufzeichnungen ausgewertet. In der Figur 5 wird beim links dargestellten Brennstab durch die waagerechten Linien ein Wassereinschluß zwischen den Pellets und der Innenwand des Brennstabes symbolisiert. Die augesandten Ultraschallsignal erfahren dabei eine durch die Punkte 42 angedeutete Intensitätsabschwächung die dann als Wassereinschluß von dem Empfängerprüfkopf 36 detektiert wird. Beim rechts dargestellten Brennstab erfahren die in dessen Wand eindringenden Signale keine Schwächung, so daß ein unbeschädigter Brennstab vorliegt. Die Sonde wird um jeweils 90° gedreht, so daß unter Beachtung des Auswertebereiches die restlichen drei Stäbe geprüft werden können.

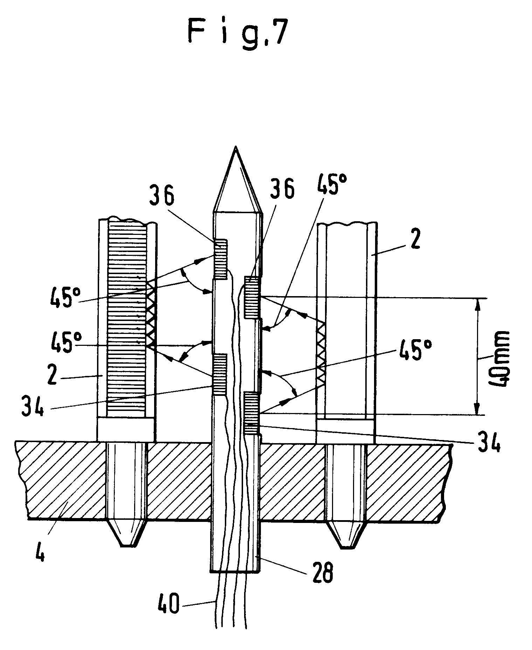

Die Sonde 28 kann zur Beschleunigung des Prüfvorganges mit zwei um 180° oder vier um 90° zueinander versetzten Prüfkopfpaaren ausgestattet sein. So zeigt die Figur 7 zwei um 180° versetzte Prüfkopfpaare, so daß in einer Prüfposition bereits zwei Brennstäbe gleichzeitig prüfbar sind. Zur Prüfung der zwei anderen Brennstäbe ist lediglich noch eine Verdrehung um 90° erforderlich. Auch hier ist beim links dargestellten Brennstab ein Wassereinschluß und beim rechts dargestellten Brennstab keine Beschädigung symbolisiert.

## Patentansprüche

1. Einrichtung zum Detektieren defekter Brennstäbe (2) eines kompletten Brennelementes (1) wassergekühlter Kernreaktoren mit einer einen Wandler tragenden Sonde (28) zur Beaufschlagung eines Brennstabes mit Ultraschall, wobei eine Intensitätsänderung der einen Wandbereich des Brennstabes durchlaufenden Signale ein Maß für einen im Brennstab vorhandenen Wassereinschluß ist, **dadurch gekennzeichnet,** daß zum Detektieren der defekten Brennstäbe eines Siedewasserreaktorbrennelementes die Sonde (28) auf ihrer Umfangsfläche in Achsrichtung betrachtet zwei übereinander angeordnete, auf einer Symmetrieachse liegende Wandler (34, 36) trägt, von welchen der eine als Sende- und der andere als Empfängerprüfkopf dient, daß die Sonde (28) flexibel ausgebildet ist und um einen unterhalb einer unteren Tragplatte (4) des Brennelementes (1) fixierten Drehpunkt (22) derart dreh- und/oder schwenkbar ist, daß sie nacheinander durch verschiedene Öffnungen (20) der Tragplatte (4) in einen von vier Brennstäben (2) begrenzten Raum (38) einfahrbar ist.

2. Einrichtung nach Anspruch 1, dadurch gekennzeichnet, daß der fixierte Drehpunkt (22) durch ein unterhalb der Tragplatte (4) angeordnetes Dreh- und Schwenklager (24) gebildet ist, durch das die Sonde (28) geführt ist.

3. Einrichtung nach Anspruch 2, dadurch gekennzeichnet, daß das Dreh- und Schwenklager (24) wenigstens in einem Sektor (I, II, III) einen unterhalb der Tragplatte (4) befindlichen, in Form eines Dreifußes (14) ausgebildeten Nasenstückes (12) angeordnet ist.

## Claims

1. Device for detecting defective fuel rods (2) of a complete fuel assembly (1) of water-cooled nuclear reactors, having a probe (28) which bears a transducer and is intended for subjecting a fuel rod to ultrasound, a change in intensity of the signals passing through a wall region of the fuel rod being a measure of an inclusion of water existing in the fuel rod, characterised in that, for detecting the defective fuel rods of a boiling-water reactor fuel assembly, the probe (28) bears on its circumferential surface two transducers (34, 36), which when viewed in the axial direction are arranged one above the other and lie on an axis of symmetry, and of which one serves as a transmitting test head and the other serves as a receiver test head, in that the probe (28) is flexibly designed and rotatable and/or pivotable about a point of rotation (22), fixed underneath a lower support plate (4) of the fuel assembly (1), in such a way that it can be made to enter successively through various openings (20) of the support plate (4) into a space (38) bounded by four fuel rods (2).

2. Device according to Claim 1, characterised in that the fixed point of rotation (22) is formed by a rotating and pivoting bearing (24) which is arranged underneath the support plate (4) and by which the probe (28) is guided.

3. Device according to Claim 2, characterised in that the rotating and pivoting bearing (24) has, at least in one sector (I, II, III), a nose piece (12) located underneath the support plate (4) and designed in the form of a tripod (14).

## Revendications

1. Dispositif pour la détection de barres de combustible (2) défectueuses dans un assemblage combustible (1) complet de réacteur nucléaire refroidi par eau, comportant une sonde (28) portant un transducteur servant à envoyer des ultrasons dans une barre de combustible, une variation d'intensité des signaux parcourant une partie de paroi de la barre de combustible constituant un indice de pénétration d'eau dans ladite barre, caractérisé par le fait que, pour détecter les barres de combustible défectueuses d'un assemblage combustible de réacteur à eau bouillante, la sonde (28) porte sur sa surface périphérique deux transducteurs (34, 36) qui, vu dans la direction axiale, sont disposés l'un au-dessus de l'autre sur un axe de symétrie et dont l'un sert de tête émettrice et l'autre de tête réceptrice, par le fait que la sonde (28) est flexible et peut tourner et/ou pivoter autour d'un point de rotation (22) fixe situé sous une plaque-support (4) inférieure de l'élément combustible (2) de manière telle, que ladite sonde puisse pénétrer successivement à travers différentes ouvertures (20) de la plaque-support (4) dans un espace (38) délimité par quatre barres de combustible (2).

2. Dispositif selon la revendication 1, caractérisé par le fait que le point de rotation (22) fixe est constitué par un palier-support (24) tournant et oscillant qui est disposé au-dessous de la plaque-support (4) et au travers duquel passe la sonde (28).

3. Dispositif selon la revendication 2, caractérisé par le fait que le palier-support (24) tournant et oscillant est disposé dans au moins un secteur (I, II, III) d'un nez (12) en forme de trépied qui se trouve au-dessous de la plaque support (4).
